# EUROPÄISCHE PATENTSCHRIFT

(11) **EP 2 888 407 B1**
(45) Veröffentlichungstag und Bekanntmachung des Hinweises auf die Patenterteilung: **16.03.2016**
(21) Anmeldenummer: 13750082.3
(22) Anmeldetag: 16.08.2013
(51) Int. Cl.: E01B 9/18

(54) **KUNSTSTOFFDÜBEL FÜR DIE BEFESTIGUNG EINER SCHIENE**
PLASTIC PLUG FOR SECURING A RAIL
CHEVILLE EN MATIÈRE PLASTIQUE PERMETTANT DE FIXER UN RAIL

(30) Priorität: 22.08.2012 DE 102012107732
(43) Veröffentlichungstag der Anmeldung: 01.07.2015
(73) Patentinhaber: Vossloh-Werke GmbH, 58791 Werdohl (DE)
(72) Erfinder: HARRAß, Michael, 42277 Wuppertal (DE); KRIEG, Nikolaj, 58135 Hagen (DE); GNACZYNSKI, Martin, 58840 Plettenberg (DE); BEDNARCZYK, Adrian, 58511 Lüdenscheid (DE); BECKER, Dietmar, 58642 Iserlohn (DE)
(74) Vertreter: Cohausz & Florack
(86) Internationale Anmeldenummer: PCT/EP2013/067171
(87) Internationale Veröffentlichungsnummer: WO 2014/029704

(56) Entgegenhaltungen:
- DE-A1-102004 004 766
- DE-A1-102011 103 127

## Beschreibung

Die Erfindung betrifft einen Kunststoffdübel für die Befestigung einer Schiene auf einem festen Grund. Dabei weist der Kunststoffdübel eine am einen stirnseitigen Ende des Kunststoffdübels ausgebildete Dübelöffnung zum Einführen einer Schwellenschraube in den Kunststoffdübel, einen vom Dübel umgebenen Dübelinnenraum, einen Schaftabschnitt, der sich in Längsrichtung des Kunststoffdübels gesehen an die Dübelöffnung anschließt, und einen Halteabschnitt auf, der sich in Längsrichtung des Kunststoffdübels gesehen an den Schaftabschnitt anschließt.

Der Halteabschnitt ist üblicherweise an seiner Außenseite mit mindestens einem in radialer Richtung vorstehenden Vorsprung versehen, der im fertigen Einbauzustand in den den Kunststoffdübel umgebenden Werkstoff des festen Untergrunds greift. Gleichzeitig weist der Halteabschnitt in der Regel an seiner Innenseite ein Innengewinde auf, in das eine Schwellenschraube mit ihrem Gewindeabschnitt eingeschraubt werden kann.

Ebenso betrifft die Erfindung eine Kombination aus einem Dübel und einer Schwellenschraube.

Um den im modernen Schienenverkehr gestellten Anforderungen gerecht zu werden, werden heute Gleise für Schienenfahrzeuge üblicherweise als so genannte "feste Fahrbahnen" verlegt, bei denen die Schienen des Gleises auf aus Beton gegossenen Schwellen oder Platten verlegt werden. Ebenso werden bei konventionellem Schotteroberbau heute üblicherweise aus Beton gegossene Schwellen in ein Schotterbett gelegt.

Die für die Befestigung der Schienen vorgesehenen Befestigungspunkte umfassen in der Regel eine gegen den durch die jeweilige Schwelle oder Platte gebildeten festen Untergrund abgestützte Führungsplatte, die gegen den Fuß der Schiene wirkt und so die Schiene seitlich führt, ein auf der Führungsplatte abgestütztes, mit mindestens einem Federarm auf den Schienenfuß wirkendes Federelement, das die zum elastischen Niederhalten der Schiene erforderlichen, gegen den festen Untergrund gerichteten Niederhaltekräfte auf den Schienenfuß aufbringt, einen in den festen Untergrund eingelassenen Dübel und ein in der Regel als Schraube oder Gewindebolzen ausgeführte Schwellenschraube, die in den Dübel eingeschraubt ist und das Federelement gegen den festen Untergrund verspannt.

Die den festen Untergrund bildenden Schwellen oder Platten werden üblicherweise aus Beton oder einem anderen fließfähigen Werkstoff gegossen. Dabei werden die in den jeweiligen Befestigungspunkten benötigten Dübel in der Regel direkt in den Werkstoff des festen Untergrunds so eingegossen, dass sie mit ihrer Dübelöffnung bündig zur freien, die Aufstandfläche für die zu befestigende Schiene bildenden Oberseite des festen Untergrunds ausgerichtet sind.

Der im jeweiligen festen Untergrund sitzende Dübel übernimmt unterschiedliche Funktionen. Zum einen ermöglicht er die einfache Befestigung der Schwellenschraube. Dabei nimmt er die bei fertig montierter Schiene zum Spannen des Federelements benötigten Zugkräfte auf und leitet sie wie auch die beim Überfahren des jeweiligen Schienenbefestigungspunkts durch ein Schienenfahrzeug auftretenden dynamischen Belastungen in den festen Untergrund.

Zum anderen dient der Dübel als elektrischer Isolator, durch den die in der Regel aus leitfähigem Stahl bestehende Schwellenschraube Spannelement gegenüber dem festen Untergrund elektrisch isoliert ist.

Gleichzeitig soll der Dübel unterschiedliche Gewindeformen aufnehmen und im Fall seines Verschleißes auf möglichst einfache Weise ausgetauscht werden können.

Schließlich soll ein Dübel der hier in Rede stehenden Art auch noch so beschaffen sein, dass er bei der Herstellung des den festen Untergrund bildenden Bauteils auf einfache Weise lagerichtig positioniert werden kann.

Aus Kunststoff gefertigte Dübel der voranstehend beschriebenen Art sind beispielsweise aus der EP 0 785 308 B1 oder der DE 10 2011 103 127 A1 bekannt. Die Herstellung des Dübels aus Kunststoff hat den Vorteil, dass bei der Formgebung von Kunststoffdübeln nur geringe Einschränkungen bestehen und auch die Isolatorwirkung problemlos erzielt werden kann.

Praktische Erfahrungen haben gezeigt, dass es unter den hohen heutzutage auftretenden Belastungen im Umfeld des Dübels, insbesondere in einer zur Aufstandfläche des Untergrunds oberflächennahen Schicht, zu Rissen des jeweiligen festen Untergrunds kommt. Diese können bis zur Zerstörung des den jeweiligen festen Untergrund bildenden Bauteils gehen.

Es ist bekannt, dass bei Dübeln mit glatten Umfangsflächen im Einbauzustand nur minimale Belastungen der Umgebung entstehen. Daher weist der im Einbauzustand an die Aufstandfläche des festen Untergrunds angrenzende Schaftabschnitt von Kunststoffdübeln der hier in Rede stehenden Art üblicherweise eine glatte, gleichmäßig zylindrische oder in Richtung der Dübelspitze konisch zulaufende Umfangsfläche auf.

Jedoch muss zur Aufnahme der für das Spannen des Federelements in einem Schienenbefestigungspunkt erforderlichen Kräfte immer eine gewisse Verklammerung zwischen dem Gusswerkstoff (Beton) des festen Untergrunds und dem Dübel gegeben sein. Dies wird in der Praxis dadurch gelöst, dass am Halteabschnitt des Dübels mindestes ein Vorsprung ausgeformt wird, über den im Einbauzustand eine formschlüssige Anbindung des Dübels an den umgebenden Werkstoff des festen Untergrunds gewährleistet ist. So sind Dübel bekannt, bei denen am Halteabschnitt in Längsrichtung des Dübels in regelmäßigen Abständen angeordnete, kragenförmig umlaufende Vorsprünge vorgesehen sind.

Weit verbreitet sind darüber hinaus Dübel, bei denen der an der Außenseite des Halteabschnitts vorgesehene Vorsprung als Außengewinde ausgebildet ist. Die Gewindeform hat den Vorteil, dass der Dübel im Fall, dass er wegen Verschleiß ersetzt werden muss, auf relativ einfache Weise nach Art einer Schraube aus der für ihn vorgesehenen Aufnahme des festen Untergrunds herausgedreht werden kann. Das Außengewinde ist üblicherweise so ausgelegt, dass die im fertigen Einbauzustand auf den Dübel über die in ihn eingeschraubte Schwellenschraube aufgebrachten Zugkräfte über die Flanken des Außengewindes in den den Dübel umgebenden Werkstoff des festen Untergrunds geleitet werden. Daher verbleibt auch bei den in der voranstehend erläuterten Weise gestalteten Kunststoffdübeln stets ein unvermeidbares Risiko, dass in Folge der im praktischen Einsatz auftretenden Belastungen im Umfeld des in den jeweiligen festen Untergrund eingebauten Dübels Risse entstehen.

In der DE 10 2011 103 127 A1 sind als Ursache für diese Rissbildung Spannungsspitzen identifiziert worden, die über das an dem Halteabschnitt des Dübels ausgebildete Gewinde in den angrenzenden Werkstoff des festen Untergrunds geleitet werden. Um diese Spannungsspitzen zu vermeiden, wird in der DE 10 2011 103 127 A1 vorgeschlagen, dem Gewinde eine bestimmte Form zu geben, durch die eine gleichmäßigere, großflächigere Spannungsverteilung erzielt werden soll.

Vor dem Hintergrund des voranstehend erläuterten Standes der Technik bestand die Aufgabe der Erfindung darin, einen Kunststoffdübel anzugeben, bei dem im fertigen Einbauzustand das Risiko der Entstehung von oberflächennahen Rissen in dem festen Untergrund minimiert ist.

Des Weiteren sollte eine Kombination aus einer Schwellenschraube und einem Kunststoffdübel angegeben werden, bei der im Einbauzustand das Risiko einer Rissausbildung ebenso auf ein Minimum reduziert ist.

In Bezug auf den Dübel ist diese Aufgabe erfindungsgemäß jeweils durch einen gemäß einem der unabhängigen Ansprüche 1 oder 3 ausgebildeten Kunststoffdübel gelöst worden.

In Bezug auf die Kombination aus einem Kunststoffdübel und einer Schwellenschraube ist die oben genannte Aufgabe erfindungsgemäß dadurch gelöst worden, dass eine solche Kombination entsprechend Anspruch 15 gestaltet ist.

Vorteilhafte Ausgestaltungen der Erfindung sind in den abhängigen Ansprüchen angegeben und werden nachfolgend wie der allgemeine Erfindungsgedanke im Einzelnen erläutert.

Gemäß den in den beiden unabhängigen Ansprüchen 1 und 3 angegebenen Verkörperungen der Erfindung weist ein erfindungsgemäßer Kunststoffdübel für die Befestigung einer Schiene auf einem festen Grund in Übereinstimmung mit dem eingangs angegebenen Stand der Technik jeweils eine an seinem einen stirnseitigen Ende ausgebildete stirnseitige Dübelöffnung zum Einführen einer Schwellenschraube in den Kunststoffdübel auf.

Des Weiteren besitzt ein erfindungsgemäßer Kunststoffdübel jeweils einen vom Dübel umgebenen Dübelinnenraum und eine in Längsrichtung des Kunststoffdübels gesehen am anderen stirnseitigen Ende des Kunststoffdübels ausgebildete Dübelspitze.

Ebenso umfasst ein erfindungsgemäßer Kunststoffdübel jeweils einen Schaftabschnitt, der sich in Längsrichtung des Kunststoffdübels gesehen an den die Dübelöffnung des Kunststoffdübels umgebenden Rand anschließt.

Darüber hinaus umfasst ein erfindungsgemäßer Kunststoffdübel jeweils einen Halteabschnitt, der sich in Längsrichtung des Kunststoffdübels gesehen an den Schaftabschnitt anschließt.

Gemäß der ersten Verkörperung der Erfindung ist an der Außenseite des Halteabschnitts mindestens ein in radialer Richtung vorstehender, um den Umfang des Halteabschnitts umlaufender Vorsprung vorgesehen, der im fertigen Einbauzustand in den den Kunststoffdübel umgebenden Werkstoff des festen Untergrunds greift.

Bei der zweiten Verkörperung der Erfindung ist der Halteabschnitt auf seiner dem Dübelinnenraum zugeordneten Innenseite mit einem Innengewinde versehen.

Gemäß der ersten Verkörperung der Erfindung ist nun die der Gewindeöffnung zugeordnete Gewindeflanke des mindestens einen Vorsprungs des Halteabschnitts des Kunststoffdübels unter einem Winkel von 90° ± 3° in Bezug auf die Längsachse des Kunststoffdübels ausgerichtet.

Gemäß der zweiten Verkörperung der Erfindung ist die innere Umfangsfläche des Schaftabschnitts des Kunststoffdübels eben ausgebildet und im Bereich des Halteabschnitts des Kunststoffdübels ein Innengewinde ausgeformt, dessen der Dübelöffnung zugeordnete Gewindeflanke unter einem Winkel von 90° ± 3° in Bezug auf die Längsachse des Kunststoffdübels ausgerichtet ist.

Beide Verkörperungen der Erfindung tragen bei in den jeweiligen festen Untergrund eingelassenem Dübel jeweils für sich gesehen zu einer Minimierung des Eintrags von Querkräften und Spannungsspitzen in das Umfeld des Dübels bei. Daher löst jede der Verkörperungen der Erfindung jeweils für sich gesehen bereits die in Bezug auf einen für die Schienenbefestigung vorgesehenen Kunststoffdübel angegebene Aufgabe. Eine optimale Wirkung der Erfindung tritt dabei dann ein, wenn beide Verkörperungen der Erfindung gleichzeitig an dem erfindungsgemäßen Kunststoffdübel verwirklicht sind, wenn also der Schaftabschnitt sowohl an seiner Außen- als auch an seiner Innenseite eben ausgebildet ist und sowohl an der Außenseite des Halteabschnitts ein vorzugsweise als Außengewinde ausgebildeter Vorsprung als auch an der Innenseite des Halteabschnitts ein Innengewinde vorhanden sind, wobei die der Dübelöffnung zugeordneten Flanken sowohl des an der Außenseite vorhandenen Vorsprungs als auch des an der Innenseite ausgebildeten Innengewindes mit der jeweils angrenzenden, achsparallel zur Längsachse des Kunststoffdübels ausgerichteten Wandwandfläche des Halteabschnitts einen Winkel von 90° ± 3° einschließen.

Beiden Ausgestaltungen eines erfindungsgemäßen Kunststoffdübels liegt die Erkenntnis zu Grunde, dass sich durch eine auf die Längsachse des Kunststoffdübels bezogene geeignete Ausrichtung der der Dübelöffnung zugeordneten Flanke des im jeweiligen Halteabschnitt vorgesehenen Vorsprungs oder Gewindes (radial vorstehender Vorsprung bzw. Außengewinde und/oder Innengewinde des Halteabschnitts) der Eintrag von Querkräften und Spannungsspitzen in den im Einbauzustand den Kunststoffdübel umgebenden Werkstoff des festen Untergrunds auf ein Minimum reduzieren lässt. Je exakter die der Dübelöffnung zugewandten Flanken des jeweiligen Vorsprungs oder Gewindes unter einem rechten Winkel in Bezug auf die Längsachse des Kunststoffdübels ausgerichtet sind, um so geringer wird die Umgebung des Dübels durch Spannungen belastet, die sich im Einbauzustand in radialer Richtung vom Kunststoffdübel ausgehend in den festen Untergrund ausbreiten.

Wenn die der Dübelöffnung zugeordnete Flanke des jeweiligen Gewindes oder Vorsprungs exakt unter einem Winkel von 90° in Bezug auf die Dübellängsachse ausgerichtet ist, können in radialer Richtung keine Kräfte mehr über diese Flanke in den umgebenden Werkstoff des festen Untergrunds geleitet werden. Dementsprechend ist bei einer solchen Ausrichtung der Anteil der Zugkräfte, die im fertigen Einbauzustand von in den Kunststoffdübel eingeschraubten Schwellenschraube aufgebracht werden und über die der Dübelöffnung zugeordnete Flanke des jeweiligen Gewindes in radialer Richtung in die Umgebung des Dübels geleitet werden, gleich "0".

Daher sieht eine vorteilhafte Ausgestaltung der Erfindung vor, dass die der Dübelöffnung zugeordnete Dübelflanke im Halteabschnitt in Bezug auf die Längsachse des Kunststoffdübels jeweils unter einem Winkel von 90° ± 1°, insbesondere exakt unter 90°, ausgerichtet ist. Dabei kann es insbesondere in Bezug auf den an der Außenseite des Halteabschnitts des Kunststoffdübels vorgesehenen, insbesondere als Außengewinde ausgebildeten Vorsprung aus fertigungstechnischen Gründen zweckmäßig sein, den Bereich des Winkels, unter dem die der Dübelöffnung zugeordnete Flanke des Vorsprungs in Bezug auf die Längsachse des Kunststoffdübels ausgerichtet ist, im Rahmen der Fertigungstoleranzen auf 90 - 91° zu beschränken, um Hinterschnitte zu vermeiden.

Bei einem erfindungsgemäßen Kunststoffdübel sind der insbesondere als Außengewinde ausgebildete, an der Außenseite des Halteabschnitts vorgesehene Vorsprung und das an der Innenseite des Halteabschnitts vorgesehene Innengewinde somit jeweils so geformt, dass sich im Einbauzustand nicht nur im Bereich des insbesondere ebenen oberen Schaftabschnitts des Kunststoffdübels, sondern auch im Bereich des Halteabschnitts allenfalls minimale Belastungen des den Kunststoffdübel umgebenden Werkstoffs des festen Untergrunds durch radial sich ausbreitenden Spannungen ergeben. Infolgedessen besteht im Bereich des erfindungsgemäß gestalteten Halteabschnitts allenfalls noch ein minimales Risiko, dass es zur Entstehung von Rissen kommt.

Mit der Erfindung ist somit der Längenbereich des Dübels, in dem es im praktischen Einsatz zu einer minimalen Belastung der Umgebung des Dübels kommt, um ein beträchtliches Stück verlängert. Gleichzeitig ist der Kunststoffdübel im Einbauzustand bereits im Halteabschnitt mit dem festen Untergrund durch Werkstoff formschlüssig verklammert.

Um die Sicherheit der Verankerung des erfindungsgemäß gestalteten Kunststoffdübels im jeweiligen festen Untergrund zu verbessern, kann sich in Längsrichtung des Kunststoffdübels gesehen an den ersten Halteabschnitt ein zweiter Halteabschnitt anschließen, in dem der an der Außenseite des Halteabschnitts vorgesehene mindestens eine Vorsprung oder das an der Außenseite des Halteabschnitts als Vorsprung vorgesehene Außengewinde sowie gegebenenfalls das jeweilige Innengewinde des Halteabschnitts fortgeführt sind.

Dabei ist die der Dübelöffnung zugeordnete Gewindeflanke der an der Außenseite vorgesehenen Vorsprünge oder des Außengewindes sowie des Innengewindes in dem Gewindeabschnitt in Bezug auf die Längsachse des Kunststoffdübels unter einem Winkel von mehr als 93° angeordnet oder ausgerundet.

"Ausgerundet" heißt hier, dass die der Dübelöffnung zugeordnete Flanke der an dem Gewindeabschnitt vorhandenen Vorsprünge oder des dort ausgebildeten Gewindes in radialer Richtung gesehen in einem kontinuierlich gekrümmten Verlauf in die der Dübelspitze zugeordnete Flanke des jeweiligen Vorsprungs oder Gewindes übergeht.

Aus fertigungstechnischen Gründen oder zur Vermeidung von Kerbwirkung am erfindungsgemäßen Kunststoffdübel kann der Übergang zwischen der der Dübelöffnung zugeordneten Flanke des an der Außenseite des jeweiligen Halteabschnitts vorhandenen Vorsprungs oder des Innengewindes und zugeordneten, achsparallel zur Längsachse des Kunststoffdübels ausgerichteten Außen- oder Innenumfangsfläche des Kunststoffdübels ausgerundet ausgebildet sein. D. h., die der Dübelöffnung zugeordnete Flanke des am Halteabschnitt vorhandenen mindestens einen Vorsprungs (Außengewinde) kann in einer Kehle in die in Längsrichtung des Kunststoffdübels ausgerichtete Umfangswand des Dübels übergehen. Genauso kann der Übergang zwischen der der Dübelöffnung zugeordneten Flanke des Innengewindes des Halteabschnitts und der in Längsrichtung des Kunststoffdübels ausgerichteten Innenumfangsfläche des Halteabschnitts abgerundet oder angephast sein.

Die Formgebung der der Dübelspitze zugeordneten Flanke des äußeren Vorsprungs kann ebenfalls jeweils derart ausgelegt werden, dass über diese Flanke nur minimale Kräfte in radialer Richtung vom Dübel ausgehend in den umgebenden Werkstoff des festen Untergrunds geleitet werden. So kann die untere Flanke schräg in Richtung der Dübelspitze ausgerichtet oder konvex nach außen ausgewölbt ausgebildet sein.

Genauso kann die der Dübelspitze zugeordnete Flanke des Innengewindes des Halteabschnitts in Abhängigkeit von der Form des am Gewindeschaft der Schwellenschraube ausgebildeten Gewindes und einer möglichst großen Kompatibilität mit unterschiedlichen Gewindeformen gewählt werden. Hier hat es sich als praktisch herausgestellt, wenn die der Dübelspitze zugeordnete Flanke des an der Außenseite des Halteabschnitts vorhandenen Vorsprungs (Außengewinde) oder Innengewindes des ersten Halteabschnitts jeweils konvex gewölbt geformt ist.

Die im Einbauzustand im Bereich des zweiten Halteabschnitts in die Umgebung des erfindungsgemäßen Kunststoffdübels eingeleiteten Spannungen können dadurch vergleichmäßigt werden, dass im Längsschnitt gesehen der Übergang zwischen der der Dübelöffnung zugeordneten Flanke des Vorsprungs oder des Innengewindes des zweiten Halteabschnitts zur der Dübelspitze zugeordneten Flanke des betreffenden Vorsprungs oder Innengewindes als konvex gewölbter, kontinuierlicher Kurvenzug ausgerundet ist. Insbesondere durch die abgerundete Form des an der Außenseite des zweiten Halteabschnitts vorhandenen Vorsprungs können im Einbauzustand hohe Ausziehkräfte des Dübels erreicht werden, da in tieferen Regionen des festen Untergrunds der weitaus größte Anteil vom Gesamtausreißwiderstand eines eingegossenen Dübels liegt.

Weiter reduziert werden können die im Einbauzustand im Bereich des ersten erfindungsgemäß ausgebildeten Kunststoffdübels in den umgebenden Werkstoff des festen Untergrunds eingeleitete Spannungen dadurch, dass an der Außenseite des Kunststoffdübels im Bereich des ersten Halteabschnitts mindestens ein an den Schaftabschnitt angeschlossener, sich in Längsrichtung des Kunststoffdübels erstreckender Steg ausgebildet ist, dessen Breite in seinem Fußbereich mindestens einem Fünfzehntel, insbesondere mindestens einem Zwölftel, des Umfangs des Kunststoffdübels entspricht, der den Vorsprung (Außengewinde) des ersten Halteabschnitts kreuzt und dessen Scheitelfläche in radialer Richtung gesehen höchstens bis zur gedachten Verlängerung der Umhüllenden des Schaftabschnitts reicht. Die Breite des jeweils vorhandenen Stegs ist dabei in seinem Fußbereich optimalerweise auf maximal ein Viertel des Umfangs des Kunststoffdübels beschränkt.

Der betreffende, sich in Längsrichtung des Kunststoffdübels erstreckende Steg stellt mit seiner Scheitelfläche eine Verlängerung der glatten Umfangsfläche des Schaftabschnitts dar, ohne dass dadurch die formschlüssige Verklammerung zwischen dem festen Untergrund und dem ersten Halteabschnitt des Kunststoffdübels wesentlich beeinträchtigt wird. Vorzugsweise sind dazu jeweils mindestens zwei oder mehr in gleichmäßigen Winkelabständen um die Längsachse des Dübels verteilt angeordnete Stege vorgesehen.

Gemäß der Erfindung sind somit im Bereich des sich an den Schaftabschnitt anschließenden ersten Halteabschnitts aufgrund der erfindungsgemäßen Formgebung des an dessen Außenseite vorhandenen, insbesondere als Außengewinde ausgebildeten Vorsprungs, sowie der beidseitig glatten Außenflächen der optional vorhandenen Stege, die im Einbauzustand rechtwinklig zur Schwellenlängsachse ausgerichtet sind, nur geringe Querkräfte auf den umgebenden Beton wirksam. Bei einem erfindungsgemäßen Dübel werden Querkräfte somit nicht rotationssymmetrisch um den Dübel herum verteilt in den festen Untergrund übertragen, sondern gezielt in eine Richtung geleitet, in der der Werkstoff des festen Untergrunds beispielsweise aufgrund von in den festen Untergrund eingelassenen Bewehrungen diese Belastungen sicher aufnehmen kann.

In entsprechender Weise können im Bereich des ersten Gewindeabschnitts in die der dem Dübelinnenraum zugeordneten Umfangsfläche eine oder mehrere nutförmige, sich in Längsrichtung des Kunststoffdübels erstreckende Ausnehmungen eingeformt sein. Diese Nuten unterbrechen die über das Innengewinde übertragenen radial sich ausbreitenden Spannungen und führen so im Einbauzustand ebenfalls zu einer Reduktion der Belastungen des Umfelds des erfindungsgemäßen Kunststoffdübels. Dabei lässt sich im Fall, dass an der Außenseite des Kunststoffdübels die voranstehend erläuterten Stege ausgebildet sind, eine Schwächung des Dübels dadurch vermeiden, dass die jeweilige Nut im Bereich des jeweils zugeordneten an der Außenseite des Kunststoffdübels vorgesehenen Stegs ausgebildet ist.

Bei einer erfindungsgemäßen Kombination aus einer Schwellenschraube und einem erfindungsgemäß ausgebildeten Kunststoffdübel weist die Schwellenschraube einen Schraubenkopf und einen sich in Längsrichtung der Schwellenschraube folgenden Gewindeschaft auf, an dem ein umlaufendes Schraubengewinde ausgebildet ist. Erfindungsgemäß ist dabei die dem Schraubenkopf zugeordnete Gewindeflanke des Schraubengewindes bezogen auf die Längsachse der Schwellenschraube unter einem Winkel von 90° ± 3° ausgerichtet. Demzufolge überträgt auch die bei einer erfindungsgemäßen Kombination eingesetzte Schwellenschraube in radialer, strahlenförmig von der Längsachse des Kunststoffdübels weggerichteter Richtung lediglich minimale Kräfte. Optimalerweise ist dazu die dem Schraubenkopf zugeordnete Gewindeflanke des Schraubengewindes möglichst exakt unter einem rechten Winkel in Bezug auf die Längsachse der Schwellenschraube ausgerichtet. Dementsprechend sieht die Erfindung vor, dass die dem Schraubenkopf zugeordnete Gewindeflanke der Schwellenschraube im Rahmen der Fertigungstoleranzen bezogen auf die Längsachse der Schwellenschraube unter einem Winkel von 90° ± max. 1° ausgerichtet ist.

Eine für den praktischen Einsatz besonders wichtige Ausgestaltung der Erfindung besteht darin, dass der Kerndurchmesser der Schwellenschraube mindestens in dem Bereich, in dem das Schraubengewinde vorhanden ist, in Richtung der Schraubenspitze abnimmt, wobei der Durchmesser des Schraubengewindes über die gesamte Länge des Gewindeschafts konstant bleibt, d. h. in radialer Richtung stets bis zu einer zylindrisch ausgebildeten Umhüllenden des Gewindeschafts reicht. Vorzugsweise läuft dazu der Kern des Schraubengewindes in Richtung der Schraubenspitze konisch zu.

Die in Richtung der Schraubenspitze sich verjüngende Form des Gewindekerns der Schwellenschraube hat den Vorteil, dass bei in den Kunststoffdübel eingeschraubter Schwellenschraube im Bereich der Gewindegänge zwischen dem Kern der Schraube und der Innenwand des Kunststoffdübels ein Freiraum verbleibt, in dem sich Schmutz sammeln kann, ohne das Ein- und Ausschrauben der Schwellenschraube zu behindern.

Bei einer erfindungsgemäßen Kombination aus Schwellenschraube und Kunststoffdübel sind somit das Gewinde der Schraube und das Innengewinde des Dübels zueinander derart optimiert, dass durch den beinahe rechtwinkligen Übergang vom Schraubenkern auf die Gewindeflanken bei axialer Zugbelastung in der Schraube eine fast ausschließlich in der Schraubenachse wirkende Zugkraft entsteht und damit Quer- sowie Tangentialkräfte rechtwinklig zur Schraube in Richtung zur Dübelwand und darüber hinaus in das dem Dübel umgebende Material des festen Untergrunds stark reduziert sind. Gleichzeitig bewirkt die erfindungsgemäße Ausformung des Innengewindes des Kunststoffdübels, dass zum einen nur geringe Querkräfte über die Gewindeflanken aufgenommen werden können und zum anderen kein Kontakt zwischen Dübelwand und Schraubenkern besteht, womit ebenfalls eine Kraftübertragung (Pressung) von Schraube zu Dübelwand verhindert wird.

Indem das Verhältnis des Schraubendurchmessers zum Durchmesser seines Kerns zum unteren Ende der Schraube größer wird, wird im Bereich des Dübelinnenraums ein gegenüber konventionellen Schrauben-/Dübelkombinationen um bis zu 50 % größeres Freivolumen zwischen Schraube und Dübel erhalten, wodurch in den Dübel gelangende Verunreinigungen (z. B. Sand) während der Montage / Demontage des Schienenbefestigungssystems weniger Störungen beim erneuten Verschrauben verursachen. Darüber hinaus erlaubt die sich verjüngende Form des Schraubenkerns, eine entsprechende Verjüngung des Innenraums des Dübels in Richtung der Dübelspitze, so dass sich bei gleichbleibendem Außendurchmesser des Dübels eine größere Kontakt-/Überschneidungsfläche zwischen dem Werkstoff des festen Untergrunds und dem erfindungsgemäßen Kunststoffdübel ergibt. Im Ergebnis trägt auch dies zur Erhöhung des Ausziehwiderstands bei.

Auch an der erfindungsgemäß eingesetzten Schwellenschraube kann zur Reduzierung von in diesem Bereich in radialer Richtung übertragenen Spannungen zwischen dem Schraubenkopf und dem Gewindeabschnitt ein Schaftabschnitt vorhanden sein, dessen Umfangsfläche glatt ausgebildet ist, wobei vorzugsweise die Umhüllende der Umfangsfläche des Schaftabschnitts mit der zylindrischen Umhüllenden des Gewindeabschnitts der Schwellenschraube zusammenfällt.

Nachfolgend wird die Erfindung anhand von Ausführungsbeispielen näher erläutert. Es zeigen:

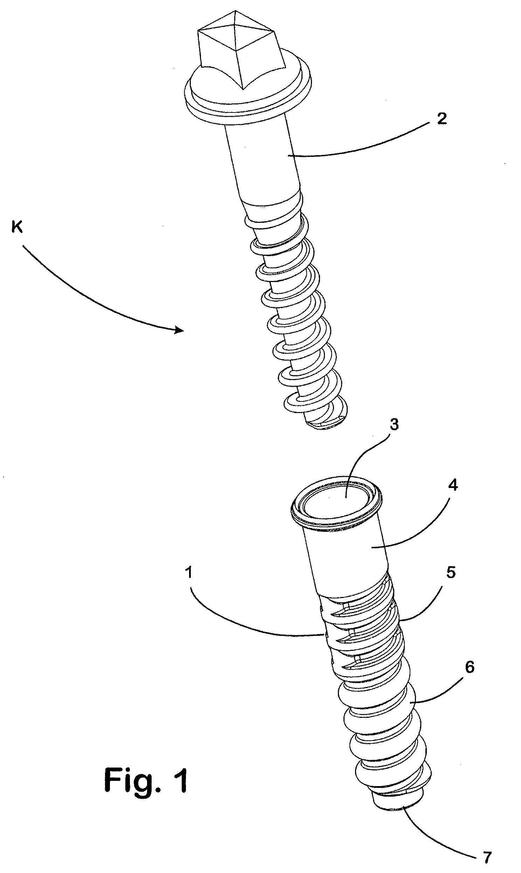

- Fig. 1: eine Schrauben-Kunststoffdübel-Kombination in einer perspektivischen Explosionsdarstellung;

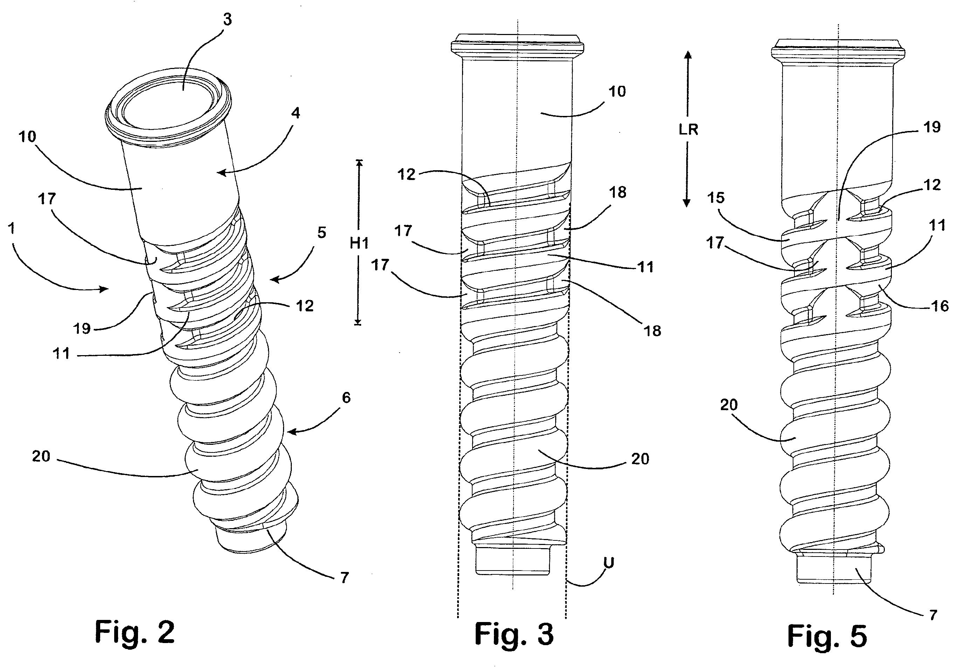

- Fig. 2: den Kunststoffdübel der Schrauben-Kunststoffdübel-Kombination in perspektivischer Ansicht;
- Fig. 3: den Kunststoffdübel in einer ersten seitlichen Ansicht;
- Fig. 4: den Kunststoffdübel in einem Längsschnitt entlang der in Fig. 3 eingezeichneten Schnittlinie A-A;
- Fig. 5: den Kunststoffdübel in einer gegenüber der Darstellung in Fig. 3 um 90° um die Längsachse des Kunststoffdübels gedrehten Stellung in seitlicher Ansicht;

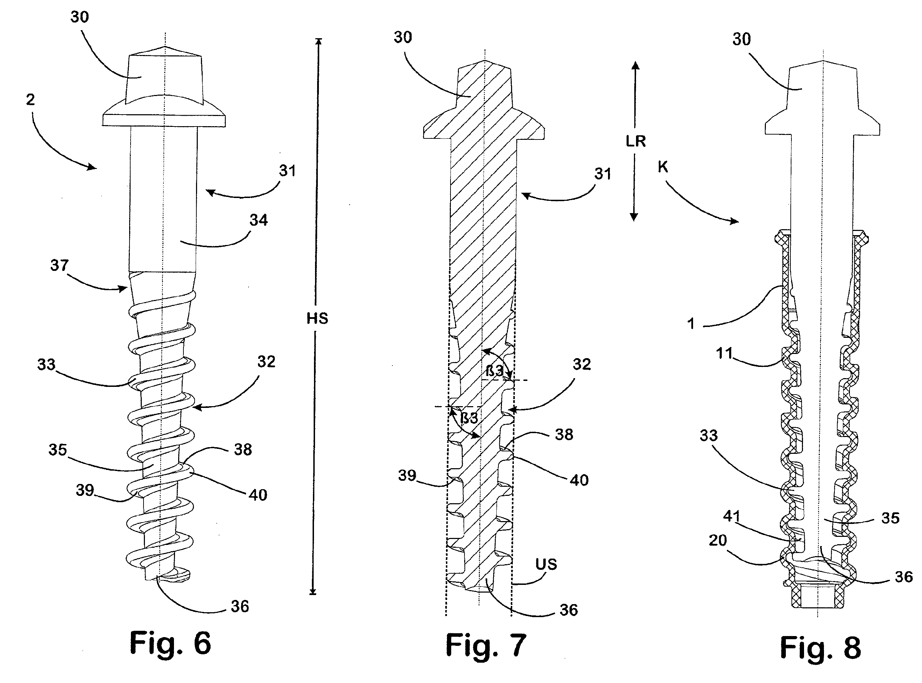

- Fig. 6: die Schwellenschraube der Schrauben-Kunststoffdübel-Kombination in seitlicher Ansicht;
- Fig. 7: die Schwellenschraube gemäß Fig. 6 in einem Längsschnitt;
- Fig. 8: die Schrauben-Kunststoffdübel-Kombination mit in den Kunststoffdübel eingesetzter Schwellenschraube und längsgeschnitten dargestelltem Kunststoffdübel.

Die Schrauben-Kunststoffdübel-Kombination K umfasst einen Kunststoffdübel 1 und eine aus einem Stahl in konventioneller Weise hergestellte Schwellenschraube 2.

Der Kunststoffdübel 1 weist eine von einem nach Art eines Kragens ausgebildeten Rand umgrenzte Dübelöffnung 3, einen Schaftabschnitt 4, der sich in Längsrichtung LR des Kunststoffdübels 1 an die Dübelöffnung 3 anschließt, einen ersten Halteabschnitt 5, der in Längsrichtung LR des Kunststoffdübels 1 auf den Schaftabschnitt folgt, einen zweiten Halteabschnitt 6, der in Längsrichtung LR an den ersten Halteabschnitt 5 angeschlossen ist, eine Dübelspitze 7 und einen Dübelinnenraum 8 auf, der von dem Schaftabschnitt 4 und den Halteabschnitten 5,6 umgrenzt ist. In die Dübelspitze 7 ist eine koaxial zur Längsachse L des Kunststoffdübels 1 ausgerichtete Durchgangsöffnung 9 eingeformt, über die in den Kunststoffdübel 1 gelangende Feuchtigkeit abfließen kann.

Die äußere Umfangsfläche 10 des Schaftabschnitts 4 ist zylindrisch und glatt ausgebildet, so dass die Umfangsfläche 10 mit der zylindrischen Umhüllenden U des Schaftabschnitts 4 zusammenfällt.

Am ersten Halteabschnitt 5 ist ein Vorsprung 11 in Form eines Außengewindes ausgebildet, das in einer gleichmäßigen Steigung ausgehend von der Grenze zwischen dem Schaftabschnitt 4 und dem ersten Halteabschnitt 5 in Richtung der Dübelspitze 7 um den ersten Halteabschnitt 5 umläuft. Der Vorsprung 11 weist dabei eine der Dübelöffnung 3 zugeordnete obere Flanke 12 auf, die bezogen auf die Längsachse L des unter einem Winkel β1 von 90° ausgerichtet ist. Dementsprechend schließt die obere Flanke 12 mit der an sie angrenzenden, achsparallel zur Längsachse L ausgerichteten Umfangswandfläche 13 des Kunststoffdübels 1 den gleichen rechten Winkel β1 ein. Aus fertigungstechnischen Gründen und um eine Kerbwirkung zu vermeiden, ist dabei der Übergang 14 zwischen der oberen Flanke 12 und der betreffenden Wandfläche 13 nach Art einer Kehle ausgerundet.

An ihrer freien, von der Umfangswandfläche 13 abgewandten Kante grenzt die obere Flanke 12 des Vorsprungs 11 an eine Scheitelfläche 15 des Vorsprungs 11, die im Wesentlichen achsparallel zur Längsachse L des Kunststoffdübels 1 ausgerichtet ist. Die Scheitelfläche 15 liegt dabei ebenfalls auf der zylindrischen Umhüllenden U des Schaftabschnitts 4.

An die Scheitelfläche 15 schließt sich die der Dübelspitze 7 zugeordnete untere Flanke 16 des Vorsprungs 11 an. Die untere Flanke 16 des Vorsprungs 11 ist dabei konvex nach außen gerundet und geht in einer ausgerundeten Kehle in die Umfangswandfläche 13 des Kunststoffdübels 1 über.

Im Bereich des Halteabschnitts 5 wird der nach Art eines Außengewindes ausgebildete Vorsprung 11 durch zwei Stege 17,18 unterbrochen, die sich gegenüberliegend zueinander als Verlängerung des Schaftabschnitts 4 über die Höhe H1 des ersten Halteabschnitts 5 erstrecken. Die Stege 17,18 weisen an ihrem Fußbereich eine Breite auf, die etwa 14 % des Umfangs des Schaftabschnitts 4 entspricht. Im Querschnitt sind die Stege 17,18 halbkreisförmig nach außen gewölbt, wobei sie in ihrem Scheitelbereich 19 dem Radius der Umhüllenden U entsprechend abgeflacht sind. Der Scheitelbereich 19 liegt dabei ebenfalls auf der Umhüllenden U des Schaftabschnitts 4, so dass der Scheitelbereich 19 der Stege 17,18 sprungfrei in die Umfangfläche 10 des Schaftabschnitts 4 übergeht.

Im Bereich des zweiten Halteabschnitts 6 ist der als Außengewinde ausgebildete Vorsprung 11 des ersten Halteabschnitts 5 als Vorsprung 20 fortgesetzt, der ebenfalls als ausgerundetes Außengewinde ausgebildet ist. Dementsprechend geht die der Dübelöffnung 3 zugeordnete Flanke des Außengewinde-Vorsprungs 20 in einem kontinuierlichen konvex nach außen gebogenen Kurvenzug in den Scheitelbereich des Vorsprungs 20 über, der in gleicher Weise in die der Dübelspitze 7 zugeordnete Flanke des Außengewinde-Vorsprungs 20 übergeht. Auch der Scheitel des Vorsprungs 20 liegt dabei auf der zylindrischen Umhüllenden des Kunststoffdübels 1.

In die Innenumfangsfläche 23 des Kunststoffdübels 1 ist ein Innengewinde 21 eingeformt, das sich über den ersten und den zweiten Halteabschnitt 5,6 erstreckt und über beide Halteabschnitte 5,6 gleichförmig geformt ist.

Die der Dübelöffnung 3 zugeordnete obere Flanke 22 des Innengewindes 21 ist dabei unter einem Winkel β2 von 90° in Bezug auf die Längsachse L des Kunststoffdübels 1 ausgerichtet, so dass die obere Flanke 22 mit der achsparallel zur Längsachse L ausgerichteten Innenumfangsfläche 23 des Kunststoffdübels 1 den gleichen rechten Winkel β2 einschließt. Der Übergang 24 zwischen der Innenumfangsfläche 23 und der oberen Flanke 22 des Innengewindes 21 ist dabei ebenfalls ausgerundet.

Gleichzeitig geht die obere Flanke 22 in einen kontinuierlich konvex nach außen gekrümmten Scheitelbereich 25 über, an den wiederum eine konkav eingewölbte, der Dübelspitze 7 zugeordnete untere Flanke 26 angeschlossen ist. Die untere Flanke 26 läuft so stufenlos in die Innenumfangsfläche 23 des Kunststoffdübels 1 aus.

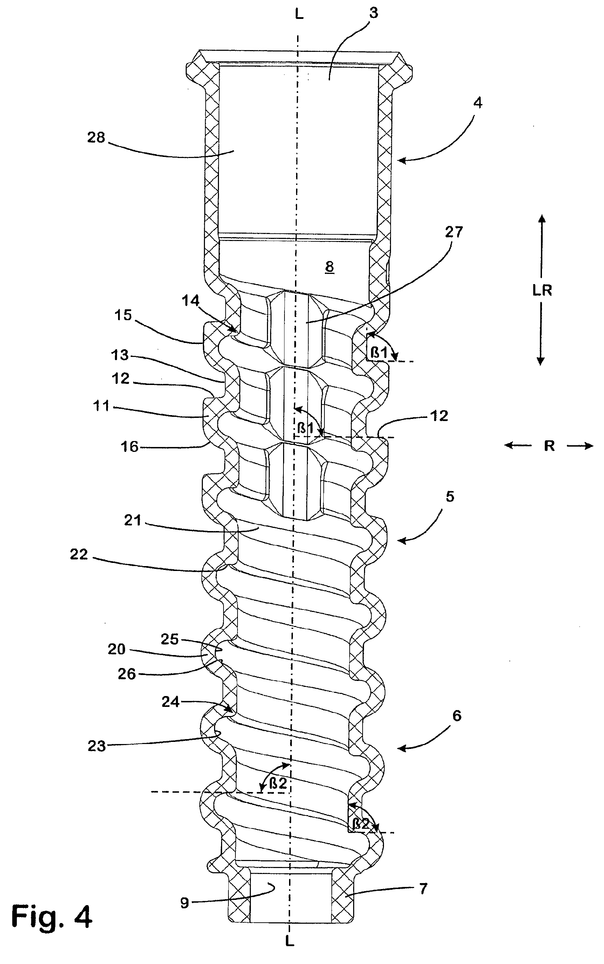

Im Bereich des ersten Halteabschnitts 5 ist das Innengewinde 21 durch nutförmige Ausnehmungen 27 unterbrochen, die sich gegenüberliegend zu den Stegen 17,18 an der Innenseite des Kunststoffdübels 1 über die Höhe H1 des ersten Halteabschnitts 5 erstrecken. Von den Ausnehmungen 27 ist aufgrund der gewählten Ansicht in Fig. 4 nur die dem Steg 18 zugeordnete Ausnehmung 27 zu sehen. Wie die Stege 17,18 tragen auch die Ausnehmungen 27 im Sinne einer Verlängerung der glatten Innenumfangsfläche 28 des Schaftabschnitts 4 dazu bei, dass die vom ersten Halteabschnitt 5 ausgehende Ausbreitung von Querkräften in den den Kunststoffdübel 1 im Einbauzustand umgebenden festen Untergrund minimiert ist.

Die Form und Abmessungen der oberen Flanke 22, des Scheitelbereichs 25 und der unteren Flanke 26 des Innengewindes 21 sind so ausgelegt, dass Schwellenschrauben 2 mit unterschiedlich geformten Gewinden in den Kunststoffdübel 1 eingeschraubt werden können.

Bevorzugt kommt in der Schrauben-Kunststoffdübel-Kombination K jedoch eine Schwellenschraube 2 der hier beschriebenen Art zum Einsatz. Eine solche Schwellenschraube 2 weist einen Schraubenkopf 30, einen in Längsrichtung LR der Schwellenschraube 2 an den Schraubenkopf 30 angeschlossenen Schaftabschnitt 31 und einen in Längsrichtung LR an den Schaftabschnitt 31 angeschlossenen Gewindeabschnitt 32 auf, der ein Außengewinde 33 trägt.

Der zylindrisch geformte Schaftabschnitt 31 weist in an sich bekannter Weise einen kleineren Durchmesser als der Schraubenkopf 30 und eine glatte Umfangsfläche 34 auf. Er erstreckt sich über ca. 24 % der Höhe HS der Schwellenschraube 2.

Im Bereich des Gewindeabschnitts 32 verjüngt sich der Kern 35 der Schwellenschraube 2 in Richtung der Spitze 36 der Schwellenschraube 2. Dabei läuft der Kern 35 in einem oberen, an den Schaftabschnitt 31 angrenzenden Bereich 37, der etwa ein Viertel der Länge des Gewindeabschnitts 32 einnimmt, zunächst mit einer stärkeren Steigung konisch zu, um über die restliche Länge des Gewindeabschnitts 32 mit gleichmäßiger Steigung konisch in Richtung der Schraubenspitze 36 zuzulaufen.

Die dem Schraubenkopf 30 zugeordnete obere Flanke 38 des Außengewindes 33 wie auch die der Schraubenspitze 36 zugeordnete untere Flanke 39 des Außengewindes 33 sind jeweils unter einem Winkel β3 von 90° in Bezug auf die Längsachse L der Schwellenschraube ausgerichtet. Gleichzeitig beschreibt der die Flanken 38,39 verbindende Scheitelbereich 40 des Außengewindes 33 einen konvex nach außen gewölbten Halbkreis. Der Scheitel des Scheitelbereichs 40 liegt dabei auf der zylindrischen Umhüllenden US des Schaftabschnitts 31 der Schwellenschraube 2.

Aufgrund des konisch in Richtung der Schraubenspitze 36 zulaufenden Kerns 35 ergibt sich so bei in den Kunststoffdübel 1 eingeschraubter Schwellenschraube 2 im der Dübelspitze 7 zugeordneten unteren Bereich des Dübelinnenraums 8 ein vergrößerter Leerraum 41, in dem sich in den Kunststoffdübel 1 gelangender Schmutz sammeln kann, ohne das Ein- oder Ausschrauben der Schwellenschraube 2 zu behindern.

Durch die erfindungsgemäße Formgebung wird erreicht, dass im Einbauzustand im Bereich des ersten Halteabschnitts 5 allenfalls noch im minimalem Umfang quer zur Längsachse L des Kunststoffdübels 1 ausgerichtete Kräfte in radialer Richtung R vom Kunststoffdübel weggerichtet in das den Kunststoffdübel 1 umgebende Material des den Kunststoffdübel 1 aufnehmenden festen Untergrunds geleitet werden. Dementsprechend ist das Risiko der Entstehung von Rissen in diesem Bereich genauso minimiert wie im Bereich des Schaftabschnitts 4, über dessen glatte Umfangfläche 10 ebenfalls keine Querkräfte in den den Kunststoffdübel 1 umgebenden Werkstoff geleitet werden.

### BEZUGSZEICHEN

- 1: Kunststoffdübel
- 2: Schwellenschraube
- 3: Dübelöffnung
- 4: Schaftabschnitt des Kunststoffdübels 1
- 5: erster Halteabschnitt des Kunststoffdübels 1
- 6: zweiter Halteabschnitt des Kunststoffdübels 1
- 7: Dübelspitze des Kunststoffdübels 1
- 8: Dübelinnenraum des Kunststoffdübels 1
- 9: Durchgangsöffnung der Dübelspitze 7
- 10: äußere Umfangsfläche des Schaftabschnitts 4
- 11: als Außengewinde an der Außenseite des ersten Halteabschnitts 5 ausgebildeter Vorsprung
- 12: obere Flanke des Vorsprungs 11
- 13: Umfangswandfläche des Kunststoffdübels 1
- 14: Übergang zwischen der oberen Flanke 12 und der Umfangswandfläche 13
- 15: Scheitelfläche des Vorsprungs 11
- 16: untere Flanke des Vorsprungs 11
- 17, 18: Stege
- 19: jeweiliger Scheitelbereich der Stege 17,18
- 20: als ausgerundetes Außengewinde ausgebildeter Vorsprung des zweiten Halteabschnitts 6
- 21: Innengewinde des Kunststoffdübels 1
- 22: der Dübelöffnung 3 zugeordnete obere Flanke des Innengewindes 21
- 23: Innenumfangsfläche des Kunststoffdübels 1
- 24: Übergang zwischen der Innenumfangsfläche 23
- 25: Scheitelbereich des Innengewindes 21
- 26: der Dübelspitze 7 zugeordnete untere Flanke des Innengewindes 21
- 27: nutförmige Ausnehmungen
- 28: glatte Innenumfangsfläche des Schaftabschnitts 4
- 30: Schraubenkopf der Schwellenschraube 2
- 31: Schaftabschnitt der Schwellenschraube 2
- 32: Gewindeabschnitt der Schwellenschraube 2
- 33: Außengewinde der Schwellenschraube 2
- 34: Umfangsfläche des Schaftabschnitts 31
- 35: Kern der Schwellenschraube 2
- 36: Spitze der Schwellenschraube 2
- 37: an den Schaftabschnitt 31 angrenzender Bereich des Gewindeabschnitts 31
- 38: dem Schraubenkopf 30 zugeordnete obere Flanke des Außengewindes 33
- 39: der Schraubenspitze 36 zugeordnete untere Flanke des Außengewindes 33
- 40: Scheitelbereich des Außengewindes 33
- 41: Leerraum im Kunststoffdübel 1 bei eingeschraubter Schraube
- H1: Höhe des ersten Halteabschnitts 5
- HS: Höhe der Schwellenschraube 2
- K: Schrauben-Kunststoffdübel-Kombination
- L: Längsachse des Kunststoffdübels 1
- LR: Längsrichtung
- R: radiale Richtung
- ß1: zwischen der Längsachse L bzw. der koaxial zur Längsachse L ausgerichteten Umfangswandfläche 13 und der oberen Flanke 12 des Vorsprungs 11 eingeschlossener Winkel
- β2: zwischen der Längsachse L bzw. der koaxial zur Längsachse L ausgerichteten Innenumfangsfläche 23 des Kunststoffdübels 1 eingeschlossener Winkel
- β3: Winkel, unter dem die obere und die untere Flanke 38,39 des Außengewindes 33 in Bezug auf die Längsachse LS der Schwellenschraube 2 jeweils ausgerichtet sind
- U: zylindrische Umhüllende U des Schaftabschnitts 4 und der Halteabschnitte 5,6
- US: Umhüllende des Schaftabschnitts 31

## Patentansprüche

1. Kunststoffdübel für die Befestigung einer Schiene auf einem festen Grund, mit einer am einen stirnseitigen Ende des Kunststoffdübels (1) ausgebildeten Dübelöffnung (3) zum Einführen einer Schwellenschraube (2) in den Kunststoffdübel (1), mit einem vom Kunststoffdübel (1) umgebenen Dübelinnenraum (8), mit einem Schaftabschnitt (4), der sich in Längsrichtung (LR) des Kunststoffdübels (1) gesehen an die Dübelöffnung (3) anschließt, und mit einem Halteabschnitt (5), der sich in Längsrichtung (LR) des Kunststoffdübels (1) gesehen an den Schaftabschnitt (4) anschließt und der an seiner Außenseite mit mindestens einem in radialer Richtung (R) vorstehenden, um seinen Umfang umlaufenden Vorsprung (11) versehen ist, der im fertigen Einbauzustand in den den Kunststoffdübel (1) umgebenden Werkstoff des festen Untergrunds greift, **dadurch gekennzeichnet, dass** die der Dübelöffnung (3) zugeordnete obere Flanke (12) des Vorsprungs (11) des Halteabschnitts (5) unter einem Winkel (ß1) von 90° ± 3° in Bezug auf die Längsachse (L) des Kunststoffdübels (1) ausgerichtet ist.

2. Kunststoffdübel nach Anspruch 1, **dadurch gekennzeichnet, dass** der Vorsprung (11) des Halteabschnitts (5) als Außengewinde ausgebildet ist.

3. Kunststoffdübel für die Befestigung einer Schiene auf einem festen Grund, mit einer am einen stirnseitigen Ende des Kunststoffdübels (1) ausgebildeten Dübelöffnung (3) zum Einführen einer Schwellenschraube (2) in den Kunststoffdübel (1), mit einem vom Kunststoffdübel (1) umgebenen Dübelinnenraum (8), mit einem Schaftabschnitt (4), der sich in Längsrichtung (LR) des Kunststoffdübels (1) gesehen an die Dübelöffnung (3) anschließt, und mit einem Halteabschnitt (5), der sich in Längsrichtung (LR) des Kunststoffdübels (1) gesehen an den Schaftabschnitt (4) anschließt und der an seiner Innenseite ein Innengewinde (21) aufweist, **dadurch gekennzeichnet, dass** die der Dübelöffnung (3) zugeordnete Flanke (22) des Innengewindes (21) unter einem Winkel (β2) von 90° ± 3° in Bezug auf die Längsachse (L) des Kunststoffdübels (1) ausgerichtet ist.

4. Kunststoffdübel nach einem der voranstehenden Ansprüche, **dadurch gekennzeichnet, dass** die Innenumfangsfläche oder Außenumfangsfläche (10) des Schaftabschnitts (4) glatt ist.

5. Kunststoffdübel nach einem der voranstehenden Ansprüche, **dadurch gekennzeichnet, dass** sich in Längsrichtung (LR) des Kunststoffdübels (1) gesehen an den ersten Halteabschnitt (5) ein zweiter Halteabschnitt (6) anschließt, in dem ebenfalls mindestens ein radial nach außen vorstehender Vorsprung (11) ausgebildet oder das jeweilige Innengewinde (21) fortgeführt ist, und dass die der Dübelöffnung (3) zugeordnete Flanke des Vorsprungs (11) oder Innengewindes (21) in dem zweiten Halteabschnitt (6) in Bezug auf die Längsachse (L) des Kunststoffdübels (1) unter einem Winkel von mehr als 93° angeordnet oder ausgerundet ist.

6. Kunststoffdübel nach einem der voranstehenden Ansprüche, **dadurch gekennzeichnet, dass** die der Dübelöffnung (3) zugeordnete obere Flanke (12) im ersten Halteabschnitt (5) in Bezug auf die Längsachse (L) des Kunststoffdübels (1) jeweils unter einem Winkel von 90° ± 1° ausgerichtet ist.

7. Kunststoffdübel nach einem der voranstehenden Ansprüche, **dadurch gekennzeichnet, dass** der Übergang zwischen der der Dübelöffnung (3) zugeordneten Flanke (12) des Vorsprungs (11) oder Innengewindes (21) und der jeweils zugeordneten in Längsrichtung (LR) des Kunststoffdübels (1) ausgerichteten Umfangsfläche (10,23) des Kunststoffdübels (1) ausgerundet ausgebildet ist.

8. Kunststoffdübel nach einem der voranstehenden Ansprüche, **dadurch gekennzeichnet, dass** die der Dübelspitze (7) zugeordnete untere Flanke (16,26) des Vorsprungs (11) oder des Innengewindes (21) konvex gewölbt geformt ist.

9. Kunststoffdübel nach einem der voranstehenden Ansprüche, **dadurch gekennzeichnet, dass** im Längsschnitt gesehen der Übergang zwischen der der Dübelöffnung (3) zugeordneten oberen Flanke (12,22) des Vorsprungs (11) oder des Innengewindes (21) des zweiten Halteabschnitts (6) zur der Dübelspitze (7) zugeordneten Flanke (16,26) des betreffenden Vorsprungs (11) oder Innengewindes (21) als konvex gewölbter, kontinuierlicher Kurvenzug ausgerundet ist.

10. Kunststoffdübel nach einem der voranstehenden Ansprüche, **dadurch gekennzeichnet, dass** an der Außenseite des Kunststoffdübels (1) im Bereich des ersten Halteabschnitts (5) mindestens ein an den Schaftabschnitt (4) angeschlossener, sich in Längsrichtung (LR) des Kunststoffdübels (1) erstreckender Steg (17,18) ausgebildet ist,
- dessen Breite in seinem Fußbereich mindestens einem Fünfzehntel des Umfangs des Kunststoffdübels (1) entspricht,
- der den Vorsprung (11) des ersten Halteabschnitts (5) kreuzt und
- dessen Scheitelfläche (19) in radialer Richtung (R) gesehen höchstens bis zur gedachten Verlängerung der Umhüllenden (U) des Schaftabschnitts (4) reicht.

11. Kunststoffdübel nach Anspruch 10, **dadurch gekennzeichnet, dass** zwei oder mehr Stege (17,18) vorgesehen sind, die in gleichen Winkelabständen um die Längsachse (L) des Kunststoffdübels (1) verteilt angeordnet sind.

12. Kunststoffdübel nach einem der voranstehenden Ansprüche, **dadurch gekennzeichnet, dass** im Bereich des ersten Halteabschnitts (5) in die dem Dübelinnenraum (8) zugeordneten Innenumfangsfläche eine nutförmige, sich in Längsrichtung (LR) des Kunststoffdübels (1) erstreckende Ausnehmung (27) eingeformt ist.

13. Kunststoffdübel nach Anspruch 12 und einem der Ansprüche 10 oder 11, **dadurch gekennzeichnet, dass** die Ausnehmung (27) im Bereich des jeweils an der Außenseite des Kunststoffdübels (1) vorgesehenen Stegs (17,18) ausgebildet ist.

14. Kunststoffdübel nach Anspruch 3 und einem der Ansprüche 11 bis 13, **dadurch gekennzeichnet, dass** die Ausnehmung (27) das Innengewinde (21) schneidet.

15. Kombination aus einer Schwellenschraube (2) und einem gemäß einem der voranstehenden Ansprüche ausgebildeten Kunststoffdübel (1), wobei die Schwellenschraube (2) einen Schraubenkopf (30) und einen in Längsrichtung (LR) der Schwellenschraube (2) auf den Schraubenkopf (30) folgenden Gewindeschaft aufweist, an dem ein umlaufendes Schraubengewinde (33) ausgebildet ist, **dadurch gekennzeichnet, dass** die dem Schraubenkopf (30) zugeordnete obere Flanke (38) des Schraubengewindes (33) bezogen auf die Längsachse (LS) der Schwellenschraube (2) unter einem Winkel (ß3) von 90° ± 3° ausgerichtet ist.

16. Kombination nach Anspruch 15, **dadurch gekennzeichnet, dass** die obere Flanke (38) bezogen auf die Längsachse (L) der Schwellenschraube (2) unter einem Winkel (β3) von 90° ± 1° ausgerichtet ist.

17. Kombination nach einem der Ansprüche 15 oder 16, **dadurch gekennzeichnet, dass** der Kern (35) der Schwellenschraube (2) mindestens in dem Bereich, in dem das Schraubengewinde (33) vorhanden ist, in Richtung der Schraubenspitze (36) konisch zuläuft.

18. Kombination nach einem der Ansprüche 15 bis 17, **dadurch gekennzeichnet, dass** das Schraubengewinde (33) über die gesamte Länge des Gewindeschafts in radialer Richtung (R) bis zu einer zylindrisch ausgebildeten Umhüllenden (US) des Gewindeschafts reicht.

19. Kombination nach einem der Ansprüche 15 bis 18, **dadurch gekennzeichnet, dass** die Schwellenschraube (2) zwischen dem Schraubenkopf (30) und dem Gewindeabschnitt einen Schaftabschnitt (31) aufweist, dessen Umfangsfläche glatt ist.

20. Kombination nach einem der Ansprüche 15 bis 19, **dadurch gekennzeichnet, dass** die Umhüllende (US) der Umfangsfläche des Schaftabschnitts (31) mit der zylindrischen Umhüllenden (US) des Gewindeabschnitts (32) zusammenfällt.

## Claims

1. Plastic dowel for fastening a rail on a solid substrate, with a dowel opening (3) formed at an end face of the plastic dowel (1) for insertion of a rail screw (2) into the plastic dowel (1), with a dowel interior space (8) enclosed by the plastic dowel (1), with a shank section (4) which connects to the dowel opening (3) as viewed in the longitudinal direction (LR) of the plastic dowel (1), and with a holding section (5) which connects to the shank section (4) as viewed in the longitudinal direction (LR) of the plastic dowel and which is provided on its outer side with at least one projection (11) running around its circumference and protruding in the radial direction (R) which, in its finished installed state, engages with the material of the solid substrate enclosing the plastic dowel (1)
**characterised in that**
the upper flank (12) of the projection (11) of the holding section (5), said upper flank (12) being assigned to the dowel opening (3), is orientated at an angle (β1) of 90° ± 3° in relation to the longitudinal axis (L) of the plastic dowel (1).

2. The plastic dowel according to claim 1,
**characterised in that**
the projection (11) of the holding section (5) is formed as an external thread.

3. A plastic dowel for the fastening of a rail to a solid substrate, with a dowel opening (3) formed at an end face of the plastic dowel (1) for insertion of a rail screw (2) into the plastic dowel (1), with a dowel interior space (8) enclosed by the plastic dowel (1), with a shank section (4) which connects to the dowel opening (3) as viewed in the longitudinal direction (LR) of the plastic dowel (1), and with a holding section (5) which connects to the shank section (4) as viewed in the longitudinal direction (LR) of the plastic dowel and which has an internal thread (21) on its inner side,
**characterised in that**
the flank (22) of the internal thread (21), said flank (22) being assigned to the dowel opening (3), is orientated at an angle (β2) of 90° ± 3° in relation to the longitudinal axis (L) of the plastic dowel (1).

4. The plastic dowel according to any one of the preceding claims,
**characterised in that**
the inner circumferential face or outer circumferential face (10) of the shank section (4) is smooth.

5. The plastic dowel according to any one of the preceding claims,
**characterised in that**
a second holding section (6) connects to the first holding section (5) as viewed in the longitudinal direction (LR) of the plastic dowel (1), in said second holding section (6) also at least one radially outwardly protruding projection (11) is formed or the respective internal thread (21) is continued,
and **in that**
the flank of the projection (11) or of the internal thread (21) in the second holding section (6), said flank being assigned to the dowel opening (3), is arranged at an angle of more than 93° in relation to the longitudinal axis (L) of the plastic dowel (1) or is rounded.

6. The plastic dowel according to any one of the preceding claims,
**characterised in that**
the upper flank (12) in the first holding section (5), said upper flank (12) being assigned to the dowel opening (3), is orientated in each case at an angle of 90° ± 1° in relation to the longitudinal axis (L) of the plastic dowel (1).

7. The plastic dowel according to any one of the preceding claims,
**characterised in that**
the transition from the flank (12) of the projection (11) or of the internal thread (21), said flank (12) being assigned to the dowel opening (3), to the respectively assigned circumferential face (10,23) of the plastic dowel (1), said circumferential face (10,23) being orientated in the longitudinal direction (LR) of the plastic dowel, has a rounded form.

8. The plastic dowel according to any one of the preceding claims,
**characterised in that**
the lower flank (16,26) of the projection (11) or of the internal thread (21), said lower flank (16,26) being assigned to the dowel tip (7), has a convex domed form.

9. The plastic dowel according to any one of the preceding claims,
**characterised in that**,
as viewed in the longitudinal direction, the transition from the upper flank (12,22) of the projection (11) or of the internal thread (21) of the second holding section (6), said upper flank (12,22) being assigned to the dowel opening (3), to the flank (16,26) of the associated projection (11) or of the internal thread (21), said flank (16,26) being assigned to the dowel tip (7), is rounded in a convex domed, continuous curve.

10. The plastic dowel according to any one of the preceding claims,
**characterised in that**
on the outer side of the plastic dowel (1) in the area of the first holding section (5) at least one web (17,18) connected to the shank section (4) and extending in the longitudinal direction (LR) of the plastic dowel (1) is formed,
- the width of said web in its base area being equal to at least a fifteenth of the circumference of the plastic dowel (1),
- said web crossing the projection (11) of the first holding section (5) and
- the apex face (19) of said web, viewed in the radial direction (R), extending at most to the imagined prolongation of the envelope (U) of the shank section (4).

11. The plastic dowel according to claim 10,
**characterised in that**
two or more webs (17,18) are provided which are arranged distributed at the same angular intervals about the longitudinal axis (L) of the plastic dowel (1).

12. The plastic dowel according to any one of the preceding claims,
**characterised in that**
in the area of the first holding section (5) a groove-shaped recess (27) extending in the longitudinal direction (LR) of the plastic dowel (1) is formed in the inner circumferential face assigned to the dowel interior space (8).

13. The plastic dowel according to claim 12 and one of claims 10 or 11,
**characterised in that**
the recess (27) is formed in the area of the web (17,18) provided in each case on the outer side of the plastic dowel (1).

14. The plastic dowel according to claim 3 and one of claims 11 to 13,
**characterised in that**
the recess (27) intersects the internal thread (21).

15. A combination of a rail screw (2) and a plastic dowel (1) formed according to any one of the preceding claims, wherein the rail screw (2) has a screw head (30) and a threaded shank following the screw head (2) in the longitudinal direction (LR) of the rail screw (2), a circulating screw thread (33) being formed on said screw shank,
**characterised in that**
the upper flank (38) of the screw thread (33), said flank (38) being assigned to the screw head (30), is orientated at an angle (β3) of 90° ± 3° in relation to the longitudinal axis (LS) of the rail screw (2).

16. The combination according to claim 15,
**characterised in that**
the upper flank (38) is orientated at an angle (ß3) of 90° ± 1° in relation to the longitudinal axis (L) of the rail screw (2).

17. The combination according to claim 15 or 16,
**characterised in that**
the core (35) of the rail screw (2) tapers conically towards the screw tip (36), at least in the area in which the screw thread (33) is present.

18. The combination according to any one of the claims 15 to 17,
**characterised in that**
the screw thread (33) extends over the entire length of the screw shank in the radial direction (R) as far as a cylindrically formed envelope (US) of the screw shank.

19. The combination according to any one of the claims 15 to 18,
**characterised in that**,
between the screw head (30) and the thread section, the rail screw (2) has a shank section (31) whose circumferential face is smooth.

20. The combination according to any one of claims 15 to 19,
**characterised in that**
the envelope (US) of the circumferential face of the shank section (31) coincides with the cylindrical envelope (US) of the thread section (32).

## Revendications

1. Cheville en matière plastique de fixation d'un rail sur un soubassement solide et qui comporte une ouverture de cheville (3), formée au niveau d'une extrémité frontale de la cheville en matière plastique (1), et destinée à l'introduction d'une vis de traverse (2) dans la cheville en matière plastique (1), avec un intérieur de cheville (8) entouré par la cheville en matière plastique (1), avec une partie de tige (4) prolongeant l'ouverture de cheville (3) dans le sens longitudinal (LR) de la cheville en matière plastique (1), et une partie de support (5) laquelle prolonge la partie de tige (4) dans le sens longitudinal (LR) de la cheville en matière plastique (1) et laquelle est pourvue, sur la circonférence de sa face extérieure, d'au moins une saillie (11) périphérique s'étendant dans le sens radial (R), qui à l'état monté, entre en prise avec le matériau du soubassement solide entourant la cheville en matière plastique (1), **caractérisée en ce que** le flanc supérieur (12) associé à l'ouverture de cheville (3) de la saillie (11) de la partie de support (5) est aligné selon un angle (ß1) de 90° ± 3° par rapport à l'axe longitudinal (L) de la cheville en matière plastique (1).

2. Cheville en matière plastique selon la revendication 1, **caractérisée en ce que** la saillie (11) de la partie de support (5) est formée en tant que filetage extérieur.

3. Cheville en matière plastique de fixation d'un rail sur un soubassement solide et qui comporte une ouverture de cheville (3), formée au niveau d'une extrémité frontale de la cheville en matière plastique (1), et destinée à l'introduction d'une vis de traverse (2) dans la cheville en matière plastique (1), avec un intérieur de cheville (8) entouré par la cheville en matière plastique (1), avec une partie de tige (4) prolongeant l'ouverture de cheville (3) dans le sens longitudinal (LR) de la cheville en matière plastique (1), et une partie de support (5) laquelle prolonge la partie de tige (4) dans le sens longitudinal (LR) de la cheville en matière plastique (1) et qui présente, sur son côté intérieur, un filetage intérieur (21), **caractérisée en ce que** le flanc (22) associé à l'ouverture de cheville (3) du filetage intérieur (21) est aligné selon un angle (β2) de 90° ± 3° par rapport à l'axe longitudinal (L) de la cheville en matière plastique (1).

4. Cheville en matière plastique selon une des revendications précédentes, **caractérisée en ce que** la surface circonférentielle intérieure ou la surface circonférentielle extérieure (10) de la partie de tige (4) est lisse.

5. Cheville en matière plastique selon une des revendications précédentes, **caractérisée en ce qu'**une deuxième partie de support (6) prolonge la première partie de support (5) dans le sens longitudinal (LR) de la cheville en matière plastique (1), où est également formée au moins une saillie (11) dirigée vers l'extérieur de manière radiale (11) ou où se poursuit le filetage intérieur respectif (21), et **en ce que** le flanc associé à l'ouverture de cheville (3) de la saillie (11) ou du filetage intérieur (21) dans la deuxième partie de support (6) est agencé ou arrondi selon un angle supérieur à 93° par rapport à l'axe longitudinal (L) de la cheville en matière plastique (1).

6. Cheville en matière plastique selon une des revendications précédentes, **caractérisée en ce que** le flanc supérieur (12) associé à l'ouverture de cheville (3) est aligné, dans la première partie de support (5), respectivement selon un angle de 90° ± 1° par rapport à l'axe longitudinal (L) de la cheville en matière plastique (1).

7. Cheville en matière plastique selon une des revendications précédentes, **caractérisée en ce que** la jonction entre le flanc (12) associé à l'ouverture de cheville (3) de la saillie (11) ou du filetage intérieur (21) et la surface circonférentielle (10, 23) de la cheville en matière plastique (1) respectivement associée et dirigée dans le sens longitudinal (LR) de la cheville en matière plastique (1) est formée de sorte à être arrondie.

8. Cheville en matière plastique selon une des revendications précédentes, **caractérisée en ce que** le flanc inférieur (16, 26) associé à la pointe de cheville (7) de la saillie (11) ou du filetage intérieur (21) est formé de sorte à être bombé convexe.

9. Cheville en matière plastique selon une des revendications précédentes, **caractérisée en ce que**, en coupe longitudinale, la jonction entre le flanc supérieur (12, 22) associé à l'ouverture de cheville (3) de la saillie (11) ou du filetage intérieur (21) de la deuxième partie de support (6) et le flanc (16, 26) associé à la pointe de cheville (7) de la saillie (11) ou du filetage intérieur (21) concerné est arrondie en tant que tracé de courbe continu bombé convexe.

10. Cheville en matière plastique selon une des revendications précédentes, **caractérisée en ce que**, sur le côté extérieur de la cheville en matière plastique (1), dans le secteur de la première partie de support (5), au moins une traverse (17, 18) est formée qui est rattachée à la partie de tige (4) et qui s'étend dans le sens longitudinal (LR) de la cheville en matière plastique (1),
- dont la largeur dans l'espace au sol correspond à au moins un quinzième de la circonférence de la cheville en matière plastique (1),
- qui croise la saillie (11) de la première partie de support (5) et
- dont la surface sommitale (19) atteigne, en direction radiale (R), tout au plus le prolongement imaginaire de l'enveloppe (U) de la partie de tige (4).

11. Cheville en matière plastique selon la revendication 10, **caractérisée en ce que** l'on prévoit deux ou plusieurs traverses (17, 18) qui sont reparties à des écarts angulaires égaux autour de l'axe longitudinal (L) de la cheville en matière plastique (1).

12. Cheville en matière plastique selon une des revendications précédentes, **caractérisée en ce que**, dans le secteur de la première partie de support (5), dans la surface circonférentielle intérieure associée à l'intérieur de cheville (8), un évidement en forme de rainure (27) est formé qui s'étend dans le sens longitudinal (LR) de la cheville en matière plastique (1).

13. Cheville en matière plastique selon la revendication 12 et une des revendications 10 ou 11, **caractérisée en ce que** l'évidement (27) est formé dans le secteur de la traverse (17, 18) prévue respectivement sur le côté extérieur de la cheville en matière plastique (1).

14. Cheville en matière plastique selon la revendication 3 et une des revendications de 11 à 13, **caractérisée en ce que** l'évidement (27) coupe le filetage intérieur (21).

15. Combinaison d'une vis de traverse (2) et d'une cheville en matière plastique (1) selon une des revendications précédentes, où la vis de traverse (2) présente une tête de vis (30) et une tige filetée figurant sur la tête de vis (30) dans le sens longitudinal (LR) de la vis de traverse (2), sur laquelle est formé un filet de vis (33) périphérique, **caractérisée en ce que** le flanc supérieur (38) associé à la tête de vis (30) du filet de vis (33) est aligné selon un angle (ß3) de 90° ± 3° par rapport à l'axe longitudinal (LS) de la vis de traverse (2).

16. Combinaison selon la revendication 15, **caractérisée en ce que** le flanc supérieur (38) est aligné selon un angle de (ß3) de 90° ± 1° par rapport à l'axe longitudinal (L) de la vis de traverse (2).

17. Combinaison selon une des revendications 15 ou 16, **caractérisée en ce que** le noyau (35) de la vis de traverse (2) s'étend de manière conique en direction de la pointe de vis (36), au moins dans le secteur dans lequel se trouve le filet de vis (33).

18. Combinaison selon une des revendications de 15 à 17, **caractérisée en ce que** le filet de vis (33) s'étend sur l'ensemble de la longueur de la tige filetée en direction radiale (R) jusqu'à une enveloppe (US) de forme cylindrique de la tige filetée.

19. Combinaison selon une des revendications de 15 à 18, **caractérisée en ce que** la vis de traverse (2) présente entre la tête de vis (30) et la partie filetée une partie de tige (31), dont la surface circonférentielle est lisse.

20. Combinaison selon une des revendications de 15 à 19, **caractérisée en ce que** l'enveloppe (US) de la surface périphérique de la partie de tige (31) coïncide avec l'enveloppe (US) cylindrique de la partie filetée (32).
